# EUROPEAN PATENT APPLICATION

(11) **EP 3 521 110 A1**
(43) Date of publication of application: **07.08.2019**
(21) Application number: 19154754.6
(22) Date of filing: 31.01.2019
(51) Int. Cl.: B60R 21/231, B60R 21/2338, B60R 21/2342

(54) **AIRBAG DEVICE, AND VEHICLE**

(30) Priority: 06.02.2018 JP 2018019537
(71) Applicant: Mazda Motor Corporation, Aki-gun, Hiroshima 730-8670 (JP)
(72) Inventor: Hiruta, Teruhiko, Aki-gun,, Hiroshima 730-8670 (JP); Yoshimura, Mie, Aki-gun,, Hiroshima 730-8670 (JP); Shibahara, Taei, Aki-gun,, Hiroshima 730-8670 (JP); Narikawa, Takahiro, Aki-gun,, Hiroshima 730-8670 (JP)
(74) Representative: Müller-Boré & Partner Patentanwälte PartG mbB

(57) **Abstract**

An airbag (31) of a rear-seat airbag device (30) includes an deployment part (40) which is deployed from a seatback (12) of a front seat toward the vehicle rearward side and then toward a vehicle downward-and-forward side up to the seatback (12) when the airbag is inflated and deployed, and the deployment part includes a stretch portion (44) which is stretchable according to a tension acting on a tip portion of the deployment part when the airbag is inflated and deployed.

## Description

### BACKGROUND OF THE INVENTION

The present invention relates to an airbag device, and a vehicle. The present invention particularly relates to a rear-seat airbag device which comprises an airbag provided in a seatback of a front seat and configured to be inflated and deployed toward a vehicle rearward side in a vehicle collision.

In general, a vehicle, such as an automotive vehicle, is equipped with a collision detecting device to detect a vehicle frontal collision, such as an acceleration sensor, which is provided at a vehicle-body front portion, wherein an airbag device is operated when the vehicle frontal collision is detected by the collision detecting device, thereby protecting an occupant in a cabin.

In a vehicle equipped with a front seat and a rear seat, it is known that a rear-seat airbag device which protects an occupant seated in the rear seat is installed in addition to a front-seat airbag device which protects an occupant seated in a driver's seat or an assistant driver's seat as the front seat.

Japanese Patent Laid-Open Publication No. H05-16759, for example, discloses a rear-seat airbag device in which an inflator and a folded airbag are arranged at a headrest or a back face of a seatback of a front seat, wherein the airbag is inflated and deployed toward a vehicle rearward side by changing an inflation-gas pressure distribution of the inflator in accordance with a state of the front seat in a vehicle collision, thereby protecting an occupant seated in a rear seat.

Herein, in the rear-seat airbag device comprising the airbag folded in the seatback of the front seat, it is requested that the occupant seated in the rear seat is securely protected in the vehicle collision regardless of the body size of the occupant because not only a standard-sized occupant but a large-sized occupant or a small-sized occupant are seated.

### SUMMARY OF THE INVENTION

Accordingly, an object of the present invention is to protect an occupant seated in a rear seat which can securely protect the occupant regardless of the body size of the occupant.

The present invention is an airbag device to be installed to a vehicle. The vehicle is equipped with a first seat and a second seat which are arranged in a vehicle longitudinal or front-back direction. The airbag device includes an airbag to be provided in a seatback of the first seat and configured to be inflated and deployed. The airbag includes an deployment part which is configured to be deployed from the seatback toward the second seat, downward in a vertical direction, and then toward the seatback of the first seat. The deployment part of the airbag includes a stretch portion which is stretchable.

Particularly, the second seat is located behind the first seat in the vehicle longitudinal or front-back direction.

Further particularly, the first seat is a front seat, and the second seat is a rear seat.

Further particularly, the airbag is configured to be inflated and deployed toward a vehicle rearward side for protecting an occupant seated in the rear seat in a vehicle collision.

Further particularly, the deployment part is configured to be deployed from the seatback toward the vehicle rearward side and then toward a vehicle downward-and-forward side up to the seatback of the front seat when the airbag is inflated and deployed.

Further particularly, the stretch portion is stretchable according to a tension acting on a tip portion of the deployment part, particularly when the airbag is inflated and deployed.

Further particularly, the deployment part includes a curved deployment part which is configured to be deployed in a curved shape from the seatback toward the second seat.

Further particularly, the curved deployment part is configured to be deployed in the curved shape from the seatback toward the vehicle rearward side.

Further particularly, the curved deployment part is configured to protect a chest of an occupant.

Further particularly, the deployment part includes a linear deployment part which is configured to be deployed in a linear shape from the curved deployment part toward the seatback of the first seat and/or downward in the vertical direction.

Further particularly, the linear deployment part is configured to be deployed in the linear shape from the curved deployment part toward the vehicle downward-and-forward side up to the seatback of the first seat.

Further particularly, the linear deployment part is configured to protect a knee of the occupant.

Further particularly, the linear deployment part is configured to have the stretch portion, particularly at a vehicle forward side thereof or at a tip portion of the linear deployment part when the airbag is inflated and deployed.

Further particularly, the linear deployment part of the airbag is configured to be deployed linearly in an inclined direction from a position located on the vehicle rearward side and on a vehicle upward side of the knee of the occupant to a position located on the vehicle forward side and on a vehicle downward side of the knee of the occupant.

Further particularly, a vehicle according to the present invention includes a first seat, a second seat, and the above airbag device. The first seat and the second seat are arranged in a vehicle longitudinal or front-back direction.

Further particularly, the second seat is located behind the first seat in the vehicle longitudinal or front-back direction.

The present invention is a rear-seat airbag device which is installed to a vehicle equipped with a front seat and a rear seat, comprising an airbag provided in a seatback of the front seat and configured to be inflated and deployed toward a vehicle rearward side for protecting an occupant seated in the rear seat in a vehicle collision, wherein the airbag includes an deployment part which is deployed from the seatback toward the vehicle rearward side and then toward a vehicle downward-and-forward side up to the seatback of the front seat when the airbag is inflated and deployed, and the deployment part of the airbag includes a stretch portion which is stretchable according to a tension acting on a tip portion of the deployment part when the airbag is inflated and deployed.

According to the present invention, the airbag can securely protect the chest and the knee of the occupant which is respectively achieved by its part deployed toward the vehicle rearward side and its part deployed toward the vehicle downward-and-forward side from the above-described rearwardly-deployed part of the airbag.

Since the deployment part of the airbag includes the stretch portion which is stretchable according to the tension acting on the tip portion of the deployment part when the airbag is inflated and deployed, the airbag can be made close to the chest of the occupant by stretching the stretch portion in accordance with the body size of the occupant, so that the occupant can be securely protected even in a case where the body size of the occupant differs.

In an embodiment of the present invention, the airbag includes, as the deployment part, a curved deployment part which is deployed in a curved shape from the seatback toward the vehicle rearward side for protecting a chest of the occupant and a linear deployment part which is deployed in a linear shape from the curved deployment part toward the vehicle downward-and-forward side up to the seatback of the front seat for protecting a knee of the occupant, and the linear deployment part has the stretch portion at a vehicle forward side thereof.

According to this embodiment, a hollow is formed between the curved deployment part and the linear deployment part, so that the airbag can be made properly compact. Further, the airbag is deployed promptly in the vehicle collision, so that the protection of the chest and the knee of the occupant can be effectively achieved by the curved deployment part and the linear deployment part. Even in a case where a distance between the front seat and the rear seat changes, the airbag deployment is made so fast that the occupant protection can be secured.

In another embodiment of the present invention, the linear deployment part of the airbag is configured to be deployed linearly in an inclined direction from a position located on the vehicle rearward side and on a vehicle upward side of the knee of the occupant to a position located on the vehicle forward side and on a vehicle downward side of the knee of the occupant.

According to this embodiment, since the linear deployment part is deployed linearly in the inclined direction from the position located on the vehicle rearward side and on the vehicle upward side of the knee of the occupant to the position located on the vehicle forward side and on the vehicle downward side of the knee of the occupant, the occupant protection can be effectively achieved by the airbag including the linear deployment part. Further, the linear deployment part moves in the vertical direction and also the curved deployment part moves in the vertical direction in accordance with the body size of the occupant when the airbag is inflated and deployed, the airbag can be properly made close to the knee or the chest of the occupant even in a case where a distance between the front seat and the knee of the occupant or a distance between the front seat and the chest of the occupant changes in accordance with the body size of the occupant.

Other features, aspects, and advantages of the present invention will become apparent from the following description which refers to the accompanying drawings.

### BRIEF DESCRIPTION OF THE DRAWINGS

FIG. **1** is a side view of a vehicle to which a rear-seat airbag device according to an embodiment of the present invention is installed.
FIG. **2** is a perspective view showing a front seat.
FIG. **3** is a perspective view showing a state where an airbag arranged in the front seat is inflated and deployed.
FIG. **4** is a side view showing the state where the airbag arranged in the front seat is inflated and deployed.
FIG. **5** is a back view showing the state where the airbag arranged in the front seat is inflated and deployed.
FIG. **6** is a sectional view of the airbag, taken along line Y6-Y6 of FIG. **4****.**
FIG. **7** is a sectional view of the airbag, taken along line Y7-Y7 of FIG. **5****.**
FIG. **8** is a sectional view of the airbag, taken along line Y8-Y8 of FIG. **5****.**
FIG. **9** is an explanatory diagram explaining the state where the airbag is inflated and deployed.

### DETAILED DESCRIPTION OF THE INVENTION

Hereafter, an embodiment of the present invention will be described referring to the attached drawings.

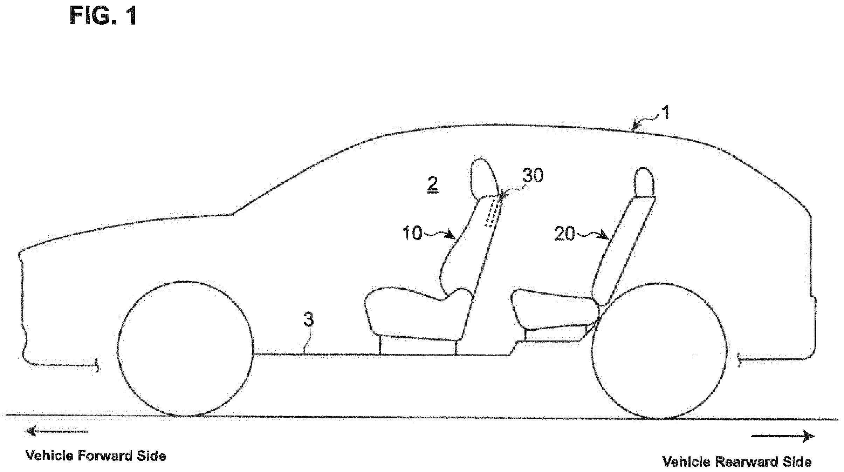

FIG. **1** is a side view of a vehicle to which an airbag device, particularly a rear-seat airbag device, according to the embodiment of the present invention is installed. As shown in FIG. **1****,** a vehicle **1** to which the rear-seat airbag device according to the embodiment of the present invention is installed is equipped, in a cabin **2,** with a first or front seat **10** which is a driver's seat or an assistant driver's seat and a second or rear seat **20** which is arranged on a vehicle rearward side of the front seat **10.** The front seat **10** and the rear seat **20** are respectively attached onto a floor panel **3** so as to be movable in a vehicle longitudinal or front-back direction. The first or front seat **10** and the second or rear seat **20** are arranged in the vehicle longitudinal or front-back direction. Particularly, the second or rear seat **20** is located behind the first or front seat **10** in the vehicle longitudinal or front-back direction. The first seat **10** may be the second-row seat, and the second seat **20** may be the third-row seat.

In addition to a front-seat airbag device (not illustrated) which protects an occupant seated in the driver's seat or the assistant driver's seat as the front seat, a rear-seat airbag device **30** which protects an occupant seated in the rear seat **20** is installed to the vehicle **1.** The rear-seat airbag device **30** is arranged at the front seat which is the driver's seat or the assistant driver's seat.

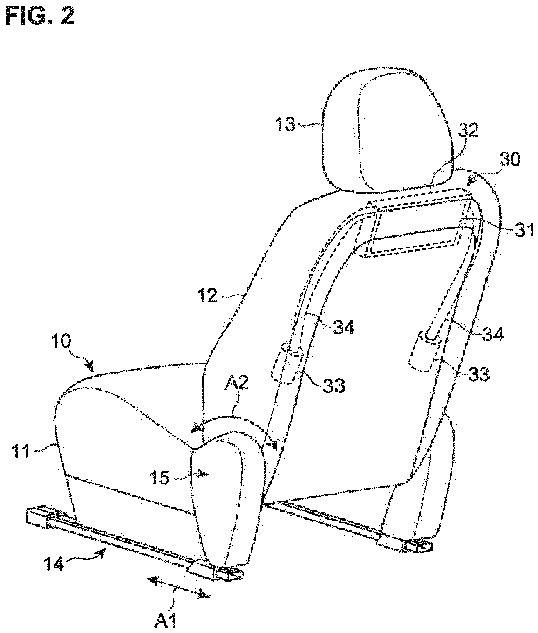

FIG. **2** is a perspective view showing the front seat. As shown in FIG. **2****,** the front seat **10** which is the driver's seat or the assistant driver's seat comprises a seat cushion **11,** a seatback **12** which is connected to a rear end portion of the seat cushion **11,** and a headrest **13** which is connected to an upper end portion of the seatback **12.**

The front seat **10** is configured to be movable in the vehicle longitudinal direction as shown by an arrow **A1** by means of a longitudinal adjusting mechanism **14** to adjust a longitudinal or front-back position of the seat cushion **11.** The front seat **10** is also configured such that an inclination angle of the seatback **12** is changeable as shown by an arrow **A2** by means of an angle adjusting mechanism **15** to adjust the inclination angle of the seatback **12.**

The rear-seat airbag device **30,** which is arranged in the seatback **12,** comprises an airbag **31,** and particularly, a case **32** which is arranged at an upper side of the seatback **12** and holds and stores the folded airbag **31,** and inflators **33** (gas generating device) which are arranged at a central side, in a vertical direction, of the seatback **12** and operate to inflate and deploy the airbag **31** by supplying gas into the airbag **31** in a vehicle collision.

The rear-seat airbag device **30** particularly further comprises a reaction plate (not illustrated) to apply a reaction to the airbags **31** when the airbag **31** is inflated and deployed, which is fixed to a seatback frame arranged in the seatback **12** and attached to a vehicle forward side of the case **32.**

The inflators **33** are provided particularly at both sides, in a vehicle width direction, of the seatback **12,** and attached particularly to the seatback frame arranged in the seatback **12.** The inflators **33** are connected to the airbag **31** stored in the case **32** by way of gas supply pipes **34.**

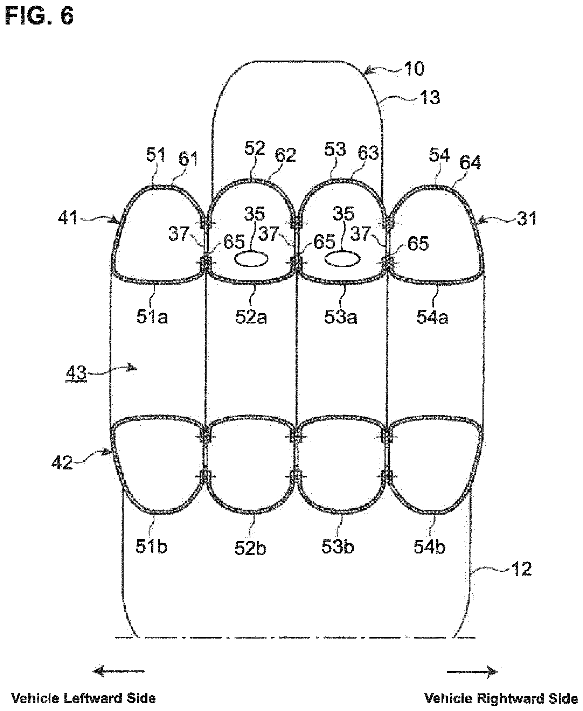

The airbag **31** particularly has one or more gas supply ports **35** through which the gas is supplied from the inflators **33** via the gas supply pipes **34,** and as shown in FIG. **6** which will be described later, the one or more, particularly two gas support ports **35** are arranged side by side in the vehicle width direction.

The seatback **12** further includes a breakage part (not illustrated) which is broken by the airbag **31** when the airbag **31** is inflated and deployed. This breakage part is configured such that its thickness is thinner than that of the other part at a vehicle rearward side of the seatback **12,** so that the breakage part is broken by an inflation pressure of the airbag **31,** for example.

The rear-seat airbag device **30** is configured particularly such that the inflators 33 operate in the vehicle collision to supply the gas into the airbag **31,** and the breakage part of the seatback **12** is broken when the airbag **31** is inflated and deployed by the gas from the inflators **33** so that the airbag **31** is inflated and deployed toward a vehicle rearward side from the seatback **12,** whereby an occupant seated in the rear seat **20** is prevented from hitting against the front seat and thereby the occupant is protected.

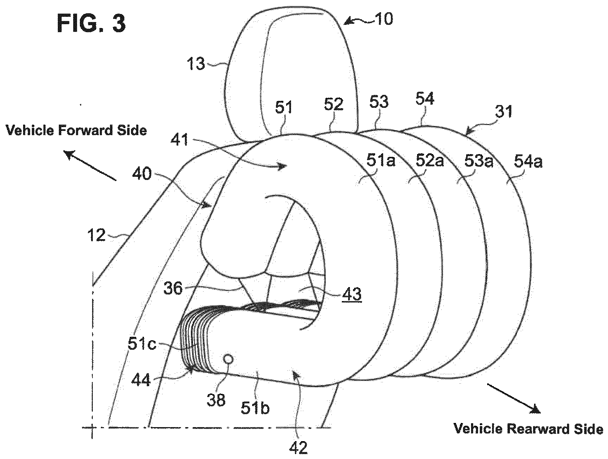

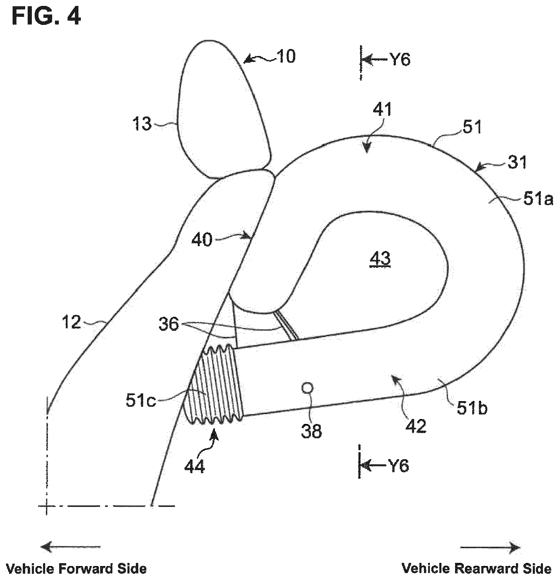

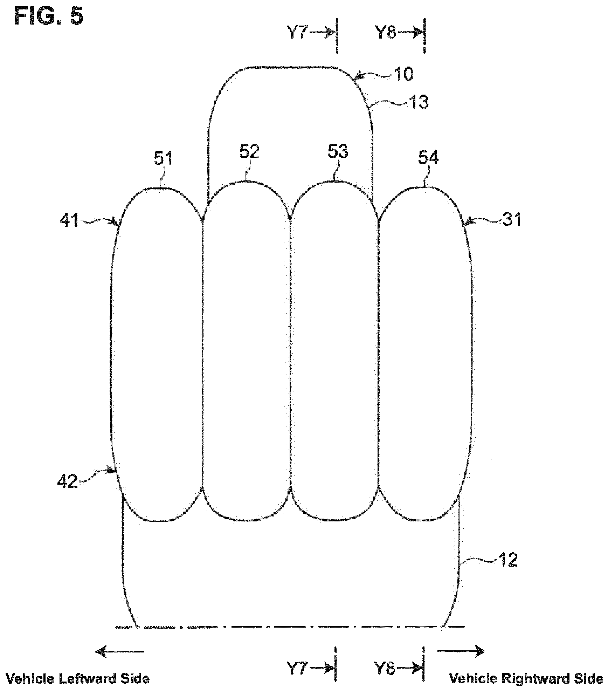

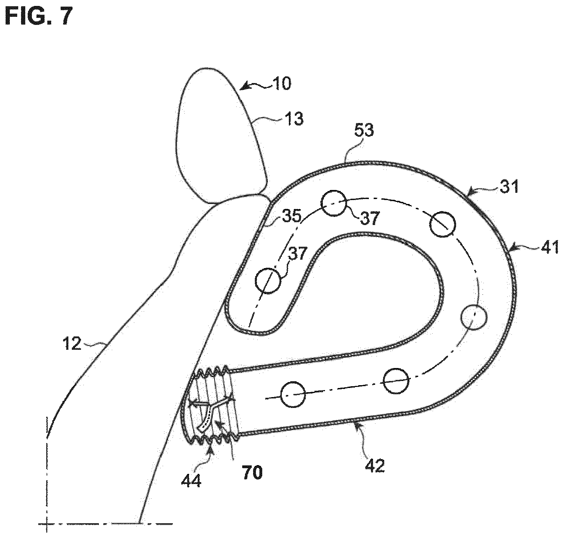

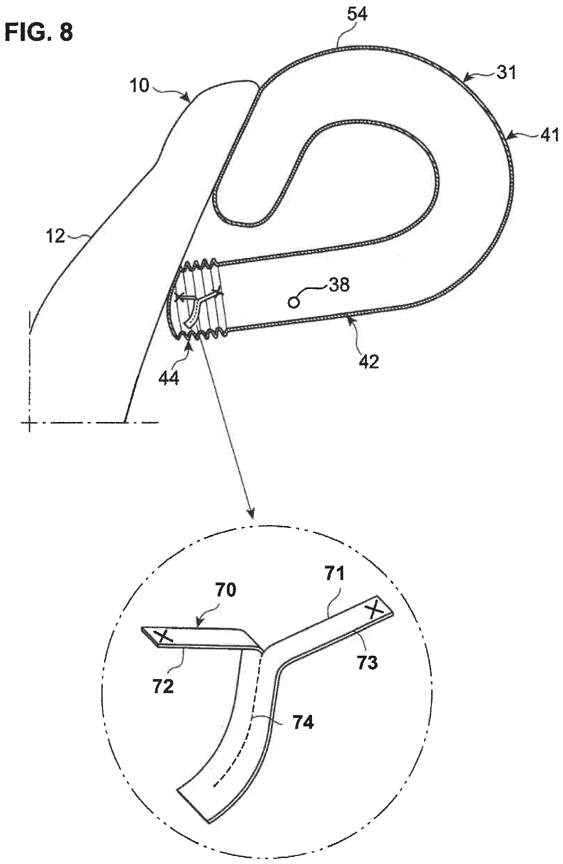

FIGS. **3****,** **4** and **5** are respectively perspective, side, and back views showing a state where the airbag arranged in the front seat is inflated and deployed. FIG. **6** is a sectional view of the airbag, taken along line Y6-Y6 of FIG. **4****,** FIG. **7** is a sectional view of the airbag, taken along line Y7-Y7 of FIG. **5****,** and FIG. **8** is a sectional view of the airbag, taken along line Y8-Y8 of FIG. **5****.**

As shown in FIGS. **3** through **8****,** the airbag **31** incudes a deployment part **40** which is configured to be deployed particularly from an upper portion of the seatback **12** toward the second or rear seat **20,** downward in a vertical direction, and then toward the seat back **12** of the first or front seat **10.** Particularly the deployment part **40** is configured to deployed toward the vehicle rearward side and then toward a vehicle downward-and-forward side up to the central portion, in the vertical direction, of the seatback **12** in a side view when the airbag **31** is inflated and deployed. Particularly the deployment part **40** comprises a curved deployment part **41** and/or a linear deployment part **42.** The curved deployment part **41** is configured to be deployed in a curved shape from the seatback **12** toward the second or rear seat **20.** The linear deployment part **42** is configured to be deployed in a linear shape from the curved deployment part **41** toward the seatback **12** and/or downward in the vertical direction. Particularly, the curved deployment part **41** is configured to be deployed in the curved shape from the upper portion of the seatback **12** toward the vehicle rearward side. The linear deployment part **42** is configured to be deployed in the linear shape from the curved deployment part **41** toward the vehicle downward-and-forward side up to the central portion, in the vertical direction, of the seatback **12.**

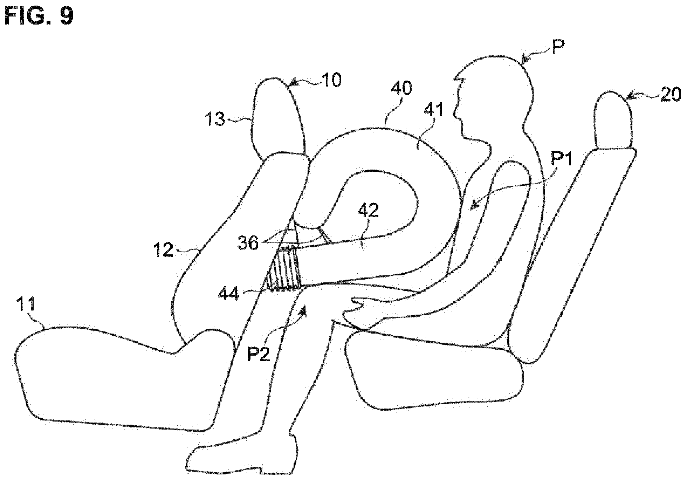

As shown in FIG. **9** which will be described later, the curved deployment part 41 is deployed particularly in an area located in front of a chest **P1** of an occupant **P** seated in the rear seat **20,** thereby protecting the chest **P1.** The linear deployment part **42** is deployed particularly in another area located in front of and above a knee **P2** of the occupant **P,** thereby protecting the knee **P2.**

The linear deployment part **42** is deployed in the liner shape from the curved deployment part **41** particularly to a position located on the vehicle forward side of the knee **P2** of the occupant **P** so as to cover in front of and above the knee **P2** such that the linear deployment part **42** is deployed linearly in an inclined direction from a position located on a vehicle rearward side and on a vehicle upward side of the knee **P2** to a position located on a vehicle forward side and on a vehicle downward side of the knee **P2.**

A vehicle forward side of the curved deployment part **41** and a vehicle forward side of the linear deployment part **42** are interconnected particularly by a connecting tether **36.** The linear deployment part **42** is arranged by using the connecting tether **36** such that the vehicle forward side of the linear deployment part **42** is downwardly spaced apart from the vehicle forward side of the curved deployment part **41** and movable in the vertical direction in accordance with a body size of the occupant **P** seated in rear seat **20.**

The connecting tether **36** is configured such that the linear deployment part **42** contacts the knee **P2** of the occupant **P** in its pulled state when a small-sized occupant is seated in the rear seat **20,** the linear deployment part **42** contacts the knee **P2** of the occupant **P** in its slightly loosened state when a standard-sized occupant is seated in the rear seat **20,** and the linear deployment part **42** contacts the knee **P2** of the occupant **P** in its greatly loosened state when a large-sized occupant is seated in the rear seat **20.**

The deployment part **40** of the airbag **31** further includes a stretch portion **44** which is stretchable particularly in the vehicle longitudinal or front-back direction according particularly to a tension acting on a tip portion of the deployment part **40** when the airbag **31** is inflated and deployed. This stretch portion **44** is provided at the tip portion of the deployment part **40** which is deployed from the seatback **12** toward the vehicle rearward side and then toward the vehicle downward-and-forward side up to the seatback **12** when the airbag **31** is inflated and deployed. The stretch portion **44** is provided particularly at the tip portion of the liner deployment part **42.**

The airbag **31** particularly or specifically comprises one or more bag portions, e.g. a first bag portion **51,** a second bag portion **52,** a third bag portion **53,** and a fourth bag portion **54** which are respectively of a hollow-cylindrical shape, having substantially the same shape, when the airbag **31** is inflated and deployed. These bag portions **51 - 54** are aligned in the vehicle width direction from a vehicle leftward side to a vehicle rightward side.

These bag portions **51, 52, 53, 54** respectively comprise curved deployment parts **51a, 52a, 53a, 54a** which are respectively deployed in the curved shape from the upper portion of the seatback **12** toward the vehicle rearward side, protruding in a roughly semicircular-arc shape, and linear deployment parts **51b, 52b, 53b, 54b** which are respectively deployed in the linear shape from the curved deployment parts **51a, 52a, 53a, 54a** toward the vehicle downward-and-forward side up to the central portion, in the vertical direction, of the seatback **12.**

The curved deployment part **41** of the airbag **31** comprises the curved deployment parts **51a, 52a, 53a, 54a** of the first, second, third, and fourth bag portions **51, 52, 53, 54,** and the linear deployment part **42** of the airbag **31** comprises the linear deployment parts **51b, 52b, 53b, 54b** of the first, second, third, and fourth bag portions **51, 52, 53, 54.**

Further, the first, second, third, and fourth bag portions **51, 52, 53, 54** respectively include stretch portions **51c, 52c, 53c, 54c** which are respectively stretchable in the vehicle longitudinal direction according to respective tensions acting on respective tip portions of the linear deployment parts **51b, 52b, 53b, 54b** when the airbag **31** is inflated and deployed. These stretch portions **51c, 52c, 53c, 54c** are respectively provided at the tip portions of the linear deployment parts **51b, 52b, 53b, 54b.**

The above-described stretch portions **51c, 52c, 53c, 54c** are configured to respectively stretch in a deployment direction by making the tensions act on the tip portions of the linear deployment parts **51b, 52b, 53b, 54b** with the inflation pressure of the airbag **31** until the airbag **31** comes to contact the occupant seated in the rear seat **20** when the airbag **31** is inflated and deployed.

As shown in FIG. **8****,** the stretch portion **54c** which is provided at the linear deployment part **54b** of the fourth bag portion **54** is folded in a bellows shape so that a fourth sheet **64** which constitutes the fourth bag portion **54** can stretch in an inflation direction of the fourth bag portion **54,** and the stretch portion **54c** is provided with a stretch tether **70** which is attached to an inside of the fourth sheet **64** which is folded in the bellows shape.

The stretch tether **70** is formed by a rectangular sheet which is made of synthetic resin or the like. The stretch tether **70** comprises a pair of tongue piece parts **72, 73** which are formed by separating one end portion of the stretch tether **70** along a cut **71** which is positioned at a center of a short side of the stretch tether **70.** The stretch tether **70** further includes a perforation line **74** which is formed in parallel to a long side of the stretch tether **70** and contiguously to the above-described cut **71.**

A one-side tongue piece part **72** of the stretch tether **70** is sewed to one side, in the deployment direction, of the fourth sheet **64** which is folded in the bellows shape, and the other-side tongue piece part **73** of the stretch tether **70** is sewed to the other side, in the deployment direction, of the fourth sheet **64** which is folded in the bellows shape. In FIG. **8****,** sewed points of the stretch tether **70** to the fourth sheet **64** are indicated by X marks.

The stretch portion **54c** of the fourth bag portion **54** is configured such that when the tension is made to act on the tip portion of the linear deployment part **54b** by the inflation pressure of the airbag **31** until the airbag **31** comes to contact the occupant seated in the rear seat **20** when the airbag **31** is inflated and deployed, the perforation line **74** of the stretch tether **70** becomes broken gradually, so that the stretch tether **70** stretches and the fourth sheet **64** folded in the bellows shape stretches in the deployment direction.

The stretch portions **51c, 52c, 53c** provided at the linear deployment parts **51b, 52b, 53b** of the first, second and third bag portions **51, 52, 53** are configured similarly to the stretch portion **54c** provided at the fourth bag portion **54.**

The stretch portion **44** provided at the tip portion of the linear deployment part **42** of the airbag **31** comprises the stretch portions **51c, 52c, 53c, 54c** of the first, second, third and fourth bag portions **51, 52, 53, 54.**

While the stretch tether **70** of the present embodiment is configured such that the perforation line **74** is of a constant shape, the shape of the perforation line **74** may be changed so as to change the stretch state of the stretch portion **54c.**

As shown in FIG. **6****,** the airbag **31** is made by sewing plural synthetic-resin made sheets together, i.e., the first sheet **61** constituting the first bag portion **51,** the second sheet **62** constituting the second bag portion **52,** the third sheet **63** constituting the third bag portion **53,** and the fourth sheet **64** constituting the fourth bag portion **54.**

The first, second, third and fourth sheets **61, 62, 63, 64** are sewed adjacently via respective synthetic-resin made partition sheets **65.** Each of the partition sheets **65** includes a connection hole **37** through which inside spaces of the adjacent first, second, third and fourth bag portions **51, 52, 53, 54** are interconnected as shown in FIGS. **6** and **7****.**

The airbag **31** has the gas supply ports **35** at respective vehicle forward sides of the second and third bag portions **52, 53** which are arranged at a central side in the vehicle width direction as shown in FIG. **6****.** The airbag **31** is configured such that the gas from the inflators **33** is supplied to the second and third bag portions **52, 53** through the gas supply ports **35** and also supplied to the first and fourth bag portions **51, 54** through the connection holes **37** of the partition sheets **65,** whereby the first, second, third and fourth bag portions **51, 52, 53, 54** are respectively inflated and deployed.

The first, second, third and fourth bag portions **51, 52, 53, 54** are configured such that the stretch portions **51c, 52c, 53c, 54c** respectively stretch in the deployment direction by making the tensions act on the tip portions of the linear deployment parts **51b, 52b, 53b, 54b** with the inflation pressure of the airbag **31** until the airbag **31** comes to contact the occupant seated in the rear seat **20** when these bag portions **51, 52, 53, 54** are inflated and deployed.

A tip portion of the airbag **31** includes vent holes **38** through which the gas inside the airbag **31** is exhausted when a load acts on the airbag **31** from the occupant **P** seated in the rear seat **29** in the vehicle collision. The vent holes **38** are formed at respective outward sides, in the vehicle width direction, of respective vehicle forward sides of the first and fourth bag portion **51, 54** which are arranged on the outward sides, in the vehicle width direction, of the airbag **31.** The airbag **31** absorbs impact energy by exhausting the gas inside the airbag **31** to the outside through the vent holes **38.**

FIG. **9** is an explanatory diagram explaining the state where the airbag is inflated and deployed. In the present rear-seat airbag device **30,** the inflator **33** operates to supply the gas into the airbag **31** in the vehicle collision, the above-described breakage part of the airbag **31** is broken, and the airbag **31** is inflated and deployed toward the vehicle rearward side from the seatback **12,** whereby the airbag **31** is inflated and deployed so as to have the curved deployment part **41** and the linear deployment part **42** as shown in FIG. **9****.**

The curved deployment part **41** and the linear deployment part **42** of the airbag **31** are located at respective positions which correspond to the chest **P1** and the knee **P2** of the occupant **P** seated in the rear seat **20,** so that the occupant **P** is protected in the vehicle collision by receiving the chest **P1** and the knee **P2** of the occupant **P** who is moved toward the vehicle forward side.

When the airbag **31** is inflated and deployed, in a case where the occupant **P** is the standard-sized occupant, the stretch portion **44** provided at the tip portion of the linear deployment part **42** stretches more than a case where the occupant **P** is the large-sized occupant, and in a case where the occupant **P** is the small-sized occupant, the stretch portion **44** stretches more than a case where the occupant **P** is the standard-sized occupant, so that the linear deployment part **42** stretches properly and the curved deployment part **41** receives the chest **P1** of the occupant **P** regardless of the body size of the occupant **P,** thereby protecting the occupant **P** properly.

The linear deployment part **42** contacts the knee **P2** of the occupant **P** in the pulled state of the connecting tether **36** in a case where the small-sized occupant is seated, the linear deployment part **42** contacts the knee **P2** of the occupant **P** in the slightly loosened state of the connecting tether **36** in a case where the standard-sized occupant is seated, and the linear deployment part **42** contacts the knee **P2** of the occupant **P** in the greatly loosened state of the tether **36** in a case where the large-sized occupant is seated, so that the linear deployment part **42** moves properly in the vertical direction and receives the knee **P2** of the occupant **P** regardless of the body size of the occupant **P,** thereby protecting the occupant **P** properly.

The curved deployment part **41** moves in the vertical direction in accordance with the vertical move of the linear deployment part **42** such that in a case where the occupant **P** is the standard-sized occupant, the curved deployment part **41** moves upwardly more than a case where the occupant **P** is the small-sized occupant, and in a case where the occupant **P** is the large-sized occupant, the curved deployment part **41** moves upwardly more than a case where the occupant **P** is the standard-sized occupant, so that the curved deployment part **41** moves in the vertical direction properly and receives the chest **P1** of the occupant **P** regardless of the body size of the occupant **P,** thereby protecting the occupant **P** properly.

While the airbag **31** of the present embodiment is configured to comprise the first, second, third and fourth bag portions **51, 52, 53, 54** when the airbag **31** is inflated and deployed, the number of bag portions is not limited to four but the airbag **31** may comprise two or three bag portions.

As described above, according to the rear-seat airbag device **30** of the present embodiment, the airbag **31** which is provided in the seatback **12** of the front seat **10** and protect the occupant **P** seated in the rear seat **20** includes the deployment part **40** which is deployed from the seatback **12** toward the vehicle rearward side and then toward the vehicle downward-and-forward side up to the seatback **12.**

Thereby, the airbag **31** can securely protect the chest **P1** and the knee **P2** of the occupant **P** which are respectively achieved by its part **41** deployed toward the vehicle rearward side and its part **42** deployed toward the vehicle downward-and-forward side from the above-described rearwardly-deployed part **41** of the airbag **31.**

Since the deployment part **40** of the airbag **31** includes the stretch portion **44** which is stretchable according to the tension acting on the tip portion of the deployment part **40** when the airbag **31** is inflated and deployed, the airbag **31** can be made close to the chest **P1** of the occupant **P** by stretching the stretch portion **44** in accordance with the body size of the occupant **P,** so that the occupant **P** can be securely protected even in a case where the body size of the occupant **P** differs.

Further, the airbag **31** includes the curved deployment part **41** which is deployed in the curved shape from the seatback **12** toward the vehicle rearward side and the linear deployment part **42** which is deployed in the linear shape from the curved deployment part **41** toward the vehicle downward-and-forward side up to the seatback **12,** and the linear deployment part **42** has the stretch portion **44** at the vehicle forward side thereof.

Thereby, the hollow **43** is formed between the curved deployment part **41** and the linear deployment part **42,** so that the airbag **31** can be made properly compact. Further, the airbag **31** is deployed promptly in the vehicle collision, so that the protection of the chest **P1** and the knee **P2** of the occupant **P** can be effectively achieved by the curved deployment part **41** and the linear deployment part **42.** Even in a case where a distance between the front seat **10** and the rear seat **20** changes, the deployment of the airbag **31** is made so fast that the protection of the occupant **P** can be secured.

Moreover, the linear deployment part **42** is configured to be deployed linearly in the inclined direction from the position located on the vehicle rearward side and on the vehicle upward side of the knee **P2** of the occupant **P** to the position located on the vehicle forward side and on the vehicle downward side of the knee **P2** of the occupant **P.** The occupant protection can be effectively achieved by the airbag **31** including the above-described linear deployment part **42.**

While the rear-seat airbag device **30** is installed to the vehicle **1** equipped with the front seat **10** and the rear seat **20** in the present embodiment, there may be provided a first-row seat, a second-row seat, and a third-row seat at a vehicle and the rear-seat airbag device **30** may be arranged at the first-row seat for protecting an occupant seated in the second-row seat, or the rear-seat airbag device **30** may be arranged at the second-row seat for protecting an occupant seated in the third-row seat.

The present invention should not be limited to the above-described embodiment and any other modifications or improvements may be applied within the scope of a spirit of the present invention.

## Claims

1. An airbag device (30) for a vehicle (1) equipped with a first seat (10) and a second seat (20) which are arranged in a vehicle longitudinal or front-back direction, comprising:
an airbag (31) to be provided in a seatback (12) of the first seat (10) and configured to be inflated and deployed,
wherein
said airbag (31) includes an deployment part (40) which is configured to be deployed from said seatback (12) toward the second seat (20), downward in a vertical direction, and then toward the seatback (12) of the first seat (10), and
said deployment part (40) of the airbag (31) includes a stretch portion (44) which is stretchable.

2. The airbag device (30) of claim 1, wherein
the first seat (10) is a front seat, and
the second seat (20) is a rear seat.

3. The airbag device (30) of claim 1 or 2, wherein
the airbag (31) is configured to be inflated and deployed toward a vehicle rearward side for protecting an occupant seated in the rear seat (20) in a vehicle collision.

4. The airbag device (30) of any one of the preceding claims, wherein
the deployment part (40) is configured to be deployed from said seatback (12) toward the vehicle rearward side and then toward a vehicle downward-and-forward side up to the seatback (12) of the front seat (10) when the airbag (31) is inflated and deployed.

5. The airbag device (30) of any one of the preceding claims, wherein
the stretch portion (44) is stretchable according to a tension acting on a tip portion of said deployment part (40), particularly when the airbag is inflated and deployed.

6. The airbag device (30) of any one of the preceding claims, wherein said deployment part (40) includes a curved deployment part (41) which is configured to be deployed in a curved shape from the seatback (12) toward the second seat (20).

7. The airbag device (30) of any one of the preceding claims, wherein said curved deployment part (41) is configured to be deployed in the curved shape from the seatback (12) toward the vehicle rearward side.

8. The airbag device (30) of claim 6 or 7, wherein said curved deployment part (41) is configured to protect a chest (P1) of an occupant.

9. The airbag device (30) of any one of the preceding claims, wherein said deployment part (40) includes a linear deployment part (42) which is configured to be deployed in a linear shape from said curved deployment part (41) toward the seatback (12) of the first seat (10) and/or downward in the vertical direction.

10. The airbag device (30) of claim 9, wherein said linear deployment part (42) is configured to be deployed in the linear shape from said curved deployment part (41) toward the vehicle downward-and-forward side up to the seatback (12) of the first seat (10).

11. The airbag device (30) of claim 9 or 10, wherein said linear deployment part (42) is configured to protect a knee (P2) of the occupant.

12. The airbag device (30) of any one of claims 9 to 11, wherein said linear deployment part (42) is configured to have said stretch portion (44), particularly at a vehicle forward side thereof or at a tip portion of the linear deployment part (42) when the airbag (31) is inflated and deployed.

13. The airbag device (30) of any one of claims 9 to 12, wherein said linear deployment part (42) of the airbag (31) is configured to be deployed linearly in an inclined direction from a position located on the vehicle rearward side and on a vehicle upward side of the knee (P2) of the occupant to a position located on the vehicle forward side and on a vehicle downward side of the knee (P2) of the occupant.

14. A vehicle (1), comprising:
a first seat (10) and a second seat (20) which are arranged in a vehicle longitudinal or front-back direction; and
an airbag device (30) according to any one of the preceding claims.
